# FASCICULE DE BREVET EUROPEEN

(11) **EP 2 146 901 B1**
(45) Date de publication et mention de la délivrance du brevet: **10.08.2011**
(21) Numéro de dépôt: 08805546.2
(22) Date de dépôt: 07.05.2008
(51) Int. Cl.: B65B 31/04, B65D 81/20, F04B 49/02, C12L 11/00

(54) **APPAREIL MENAGER DE CONSERVATION DE BOUTEILLES, NOTAMMENT DE BOUTEILLES DE VIN DEBOUCHEES ET/OU PARTIELLEMENT CONSOMMEES**
HAUSHALTSVORRICHTUNG ZUR LAGERUNG VON FLASCHEN, INSBESONDERE GEÖFFNETEN UND/ODER TEILWEISE AUFGEBRAUCHTEN WEINFLASCHEN
HOUSEHOLD APPARATUS FOR STORING BOTTLES, NOTABLY BOTTLES OF WINE THAT HAVE BEEN OPENED AND/OR PARTIALLY CONSUMED

(30) Priorité: 11.05.2007 FR 0703393; 17.12.2007 FR 0708776
(43) Date de publication de la demande: 27.01.2010
(73) Titulaire: Eurocave, 69100 Villeurbanne (FR)
(72) Inventeur: SERRE, Didier, 69006 Lyon (FR); RIVIER, Paul, 74150 Rumilly (FR); LE MOULLAC, Pierric, 69440 Mornant (FR); WARROUX, Cédric, 69330 Meyzieu (FR)
(74) Mandataire: Grand, Guillaume
(86) Numéro de dépôt international: PCT/FR2008/000640
(87) Numéro de publication internationale: WO 2008/152235

(56) Documents cités:
- EP-A- 0 478 243
- WO-A-98/22571
- WO-A-2005/020706
- FR-A- 2 588 531
- US-A- 5 031 785
- US-A1- 2003 136 791
- US-A1- 2005 074 342

## Description

La présente invention concerne un appareil ménager de conservation d'au moins une bouteille contenant un liquide alimentaire et dont le col est ouvert, notamment d'une bouteille de vin débouchée et/ou partiellement consommée.

Il est bien connu que pour conserver du vin ou, plus généralement, un liquide alimentaire dans une bouteille ouverte, il faut empêcher qu'il soit en contact avec l'oxygène de l'air, faute de quoi ses qualités gustatives et organoleptiques en particulier se détériorent rapidement. Au surplus, il est préférable de tenir la bouteille à une température donnée, fonction de la qualité du vin, cette température étant généralement inférieure à la température ambiante des pièces de vie quotidienne.

Dans le domaine professionnel du service du vin, notamment dans la restauration, il existe à cette fin des appareils qui, par un premier tuyau débouchant dans la partie haute de la bouteille, appliquent une pression permanente d'un gaz neutre, tel que de l'azote, cette pression étant avantageusement utilisée pour pousser le vin à travers un second tuyau, afin d'assurer le service du vin, sans avoir à dégager le système de support de ces premier et second tuyaux, rapporté de manière étanche dans le col de la bouteille. Ce genre d'appareils nécessite l'immersion du second tuyau dans le volume de vin, jusqu'au fond de la bouteille, de sorte que l'appareil doit être normalement nettoyé à chaque changement de bouteille. La manipulation est donc fastidieuse et, en tout état de cause, est totalement inadaptée à un usage domestique, qui, par définition, se doit d'être simple et facile pour un utilisateur non professionnel. En outre, le coût de ce genre d'appareil reste élevé.

L'invention s'intéresse ainsi aux appareils de conservation ménagers, c'est-à-dire aux appareils visant à accroître le confort et agrémenter la vie au foyer. Dans ce domaine, une première solution connue, qui s'inspire de la solution professionnelle évoquée ci-dessus, consiste à injecter dans une bouteille de vin débouchée un gaz neutre et/ou lourd, avant de refermer la bouteille par son bouchon d'origine. L'utilisation d'un gaz neutre nécessite de chasser au préalable l'air de la bouteille, tandis que le recours à un gaz lourd ne nécessite pas le remplissage total de la bouteille par ce gaz, la présence d'un « matelas gazeux » à la surface libre du vin étant en principe suffisante pour empêcher son oxydation. Une fois rebouchée, la bouteille est ensuite rangée, dans une armoire ou un conteneur, dont la température intérieure est de préférence ajustée à la qualité du vin ainsi stocké. On comprend que les manipulations pour conserver le vin d'une bouteille ouverte sont ainsi multiples et fastidieuses. Pour l'utilisateur, elles prennent un temps important , ce qui tend à rendre ces manipulations similaires à des corvées ménagères, très éloignées du plaisir que recherche l'utilisateur à disposer d'un bon vin consommé sur plusieurs jours.

Une autre solution connue consiste à utiliser une tête de tirage au vide de la bouteille, qui se présente, pour les appareils connus, sous la forme d'un bouchon spécial intégrant une valve : après avoir rapporté ce bouchon spécial dans le col de la bouteille à conserver, l'utilisateur actionne, manuellement ou grâce à une source d'énergie électrique, une pompe à vide qui permet d'aspirer, via un passage délimité dans le bouchon spécial, l'air contenu dans la partie haute de la bouteille. Une fois qu'un niveau de vide satisfaisant est atteint, la pompe à vide est dégagée, tandis que le bouchon spécial est laissé en place, sa valve empêchant l'air extérieur de pénétrer dans la partie haute de la bouteille. La bouteille est ensuite rangée, dans une armoire ou un conteneur, de préférence réfrigéré. Le tirage au vide de la bouteille évite ainsi d'utiliser des gaz neutres et/ou lourds, dont les coûts sont substantiels, dont l'innocuité sur la santé et les effets à long terme sur l'environnement risquent d'appeler des réserves, et dont le « côté » chimique rebute certains utilisateurs. En outre, pour atteindre un niveau de vide suffisant dans la bouteille, la manipulation de ce genre de têtes au tirage de vide s'avère particulièrement fastidieuse en raison du temps important qu'elle prenne à l'utilisateur et des contraintes d'étanchéité qu'elle pose.

Un exemple de ce genre de solution est fourni par EP-A-0 478 243, qui peut ainsi être considéré comme l'état de la technique le plus proche de la présente invention. Plus précisément, EP-A-0 478 243 divulgue, à ses figures 1, 3 et 7, un appareil ménager qui comprend une source de vide, une tête de tirage au vide, et un bâti de support mobile et de guidage mécanique de cette tête. En plus de cette tête de tirage au vide, cet appareil inclut un bouchon spécial qui, avant qu'une bouteille ne soit approchée de la tête de tirage au vide, est manipulé de manière indépendante par l'utilisateur pour fermer le col de cette bouteille, la tête de tirage au vide étant ensuite amenée à coopérer avec ce bouchon spécial en vue de tirer au vide la bouteille.

En outre, aussi bien avec des appareils utilisant des gaz neutres et/ou lourds qu'avec des appareils permettant de tirer au vide la bouteille, la qualité de conservation du vin chute en général rapidement car, dans la mesure où la surface libre de vin est bien plus grande lorsque la bouteille est entamée par rapport à une bouteille pleine, dont la surface libre de vin est située dans le col, une reprise progressive d'air extérieur tend à se produire naturellement à travers le bouchon fermant la bouteille.

Le but de la présente invention est de proposer un appareil ménager de conservation d'au moins une bouteille entamée, qui soit extrêmement facile et rapide à utiliser, tout en garantissant une qualité de conservation stable dans le temps.

A cet effet, l'invention a pour objet un appareil ménager de conservation d'au moins une bouteille contenant un liquide alimentaire et dont un col de service est ouvert, telle qu'une bouteille de vin débouchée, cet appareil étant tel que défini à la revendication 1.

L'idée sous-jacente à l'invention est de rechercher une simplification extrême des manipulations pour l'utilisateur, afin de ne laisser à ce dernier que les gestes naturels et agréables de se saisir d'une bouteille entamée, de se servir en liquide contenu dans cette bouteille, si besoin à plusieurs reprises, puis de poser ou reposer cette bouteille à un emplacement prédéterminé, dans lequel l'appareil conforme à l'invention garantit la conservation du liquide restant dans la bouteille. Pour ce faire, l'idée à la base de l'invention est d'éviter à l'utilisateur d'avoir à rapprocher manuellement l'un de l'autre le col de la bouteille et la tête de tirage au vide de cette bouteille, en prévoyant que ce rapprochement se produise automatiquement ou, tout au moins, qu'il soit assisté par l'appareil, grâce à ses moyens de déplacement de la tête de tirage au vide. En pratique, cette tête est montée mobile par rapport au bâti de l'appareil, la trajectoire de déplacement de la tête étant pré-fixée de manière que, lorsque l'utilisateur pose ou repose la bouteille entamée à un emplacement prédéterminé fixe par rapport au bâti, les moyens de déplacement précités guident efficacement la tête jusqu'au col de la bouteille quelque soit la hauteur de celle-ci. En outre, ces moyens de déplacement précités sont prévus, conformément à l'invention, pour presser et maintenir la tête contre le col de la bouteille, garantissant une bonne étanchéité entre la tête et le col. Du vide peut alors circuler de manière efficace dans le passage d'aspiration délimité par la tête, pour tirer au vide la bouteille, c'est-à-dire abaisser sa pression intérieure à un niveau satisfaisant pour conserver le liquide qu'elle contient. Typiquement, pour conserver du vin, le niveau de vide atteint doit excéder 0,1 bar sous la pression atmosphérique. En outre, le placage de la tête en appui étanche contre le col de la bouteille par ces moyens de déplacement est reproductible et stable dans le temps, garantissant un haut niveau de conservation du liquide contenu dans la bouteille.

En pratique, l'actionnement de la source de vide, telle qu'une pompe à vide, et l'actionnement des moyens de déplacement de la tête, notamment de la partie de ces moyens liée cinématiquement à la tête, peuvent être commandés de différentes façons. Avantageusement, la participation de l'utilisateur liée à ces actionnements est minimale, l'utilisateur se contentant par exemple d'appuyer directement sur un interrupteur, ou de fermer une porte qui, conjointement avec le bâti, délimite un compartiment de stockage de la bouteille, de préférence réfrigéré, ou de solliciter la tête avec un geste d'entraînement très simple, tel qu'une poussée vers le bas. Des capteurs de repérage de la présence d'une bouteille dans sa position prédéterminée par rapport au bâti peuvent même être prévus, pour commander les actionnements précités, réduisant encore davantage la participation de l'utilisateur à ces actionnements. Dans tous les cas, on comprend que, une fois que ces actionnements sont amorcés, l'utilisateur peut s'éloigner rapidement de l'appareil conforme à l'invention, puisque ce dernier peut avantageusement déplacer automatiquement la tête jusqu'en appui étanche contre le col de la bouteille et tire ensuite, également automatiquement, cette dernière au vide, sans que l'utilisateur n'ait à intervenir de nouveau. Autrement dit, l'appareil selon l'invention fonctionne, au moins en bonne partie, en temps masqué vis-à-vis de l'utilisateur.

Des caractéristiques additionnelles avantageuses de l'appareil selon l'invention, prises isolément ou selon toutes les combinaisons techniquement possibles, sont énoncées aux revendications dépendantes 2 à 15.

L'invention sera mieux comprise à la lecture de la description qui va suivre, donnée uniquement à titre d'exemple et faite en se référant aux dessins sur lesquels :
- la figure 1 est une vue schématique en élévation frontale d'un appareil conforme à l'invention ;
- la figure 2 est une vue schématique en perspective de l'appareil de la figure 1, dont plusieurs composants n'ont pas été repris sur la figure 2 à des fins de clarté ;
- la figure 3 est une section schématique partielle selon la ligne III-III de la figure 1 ;
- la figure 4 est une vue en perspective d'un élément de réfrigération de l'appareil, représenté seul ;
- la figure 5 est une vue en perspective d'une tête de tirage au vide, appartenant à l'appareil des figures 1 et 2 ;
- les figures 6 à 8 sont des sections schématiques de la tête suivant le plan VI indiqué à la figure 5, illustrant respectivement trois configurations d'utilisation différentes de cette tête au sein de l'appareil ;
- la figure 9 est une vue analogue à la figure 1, d'une variante de l'appareil conforme à l'invention ;
- les figures 10A et 10B sont des coupes schématiques selon la ligne XI-XI indiquée à la figure 1, relative à une autre variante de réalisation de l'appareil conforme à l'invention ;
- la figure 11 est une vue en perspective d'un autre exemple de réalisation d'un appareil conforme à l'invention ;
- la figure 12 est une vue schématique en perspective du dispositif de la figure 11, dont certains des composants ont été retirés pour permettre l'observation de l'intérieur de l'appareil ;
- la figure 13 est une coupe partielle selon le plan XIII de la figure 12 ;
- la figure 14 est une vue en élévation selon la flèche XIV de la figure 12 ;
- la figure 15 est une vue en perspective, sous un angle de vue différent de celui des figures 11 et 12, d'une partie seulement de l'appareil, incluant notamment une de ses têtes de tirage au vide ;
- la figure 16 est une coupe partielle selon la ligne XVI-XVI de la figure 14, illustrant la partie de l'appareil de la figure 15, montrée dans une configuration d'utilisation différente de celle illustrée à la figure 12 ;
- la figure 17 est une vue en perspective d'un élément de réfrigération de l'appareil des figures 11 à 16, représenté seul ; et
- la figure 18 est une section schématique partielle de l'élément de réfrigération de la figure 17, analogue à la figure 3.

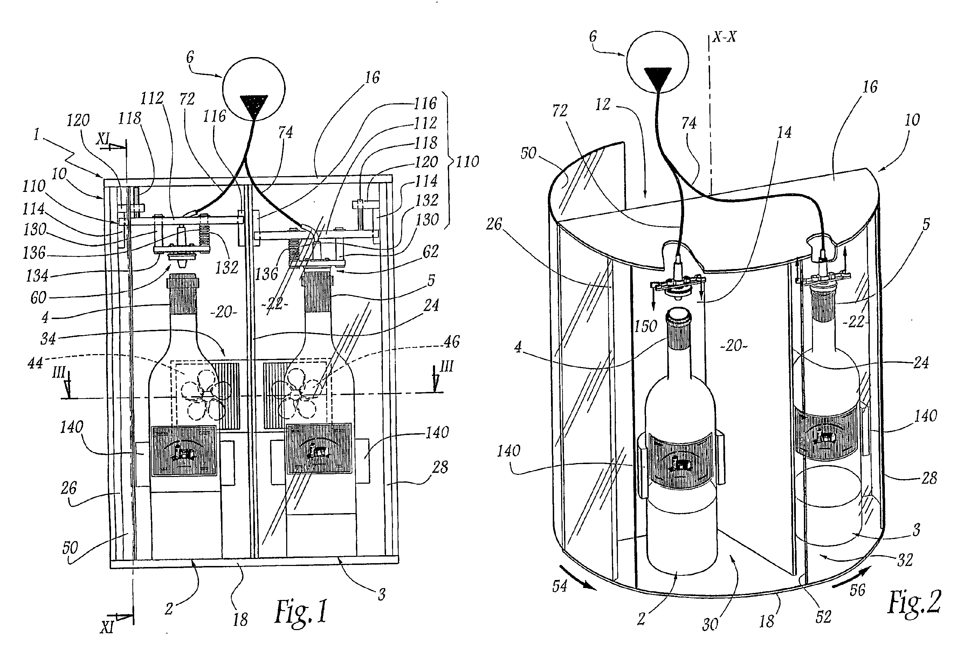

Sur les figures 1 à 3 est représenté un appareil ménager 1 de conservation de deux bouteilles de vin 2 et 3. Chaque bouteille 2, 3 comporte, à son extrémité supérieure, un col 4, 5 permettant de se servir en vin, c'est-à-dire de déverser le vin contenu dans la bouteille à l'extérieur de cette dernière. Les cols 4 et 5 sont débouchés, c'est-à-dire qu'ils sont dépourvus de leur bouchon, typiquement en liège, qui fermait à l'origine la bouteille de manière étanche, pour permettre son transport depuis un lieu d'embouteillage jusqu'à un lieu de débouchage où le consommateur a dû retirer ce bouchon d'origine, en vue de consommer le vin contenu dans la bouteille.

L'appareil 1 comporte un bâti 10 de rangement des bouteilles 2 et 3. Dans l'exemple considéré aux figures, ce bâti présente avantageusement une forme extérieure globalement cylindrique, à base circulaire et centrée sur un axe géométrique vertical X-X. Le volume intérieur du bâti 10 est divisé en deux sous-volumes principaux, considérés comme respectivement tournés vers l'avant et vers l'arrière, étant entendu que, lorsque l'appareil 1 est en service normal, le sous-volume avant est dirigé vers l'utilisateur, tandis que le sous-volume arrière 12 est dirigé à l'opposé. Les sous-volumes avant et arrière sont séparés l'un de l'autre par une cloison verticale 14, intégrée fixement dans le bâti 10 et s'étendant ici dans un plan diamétral du bâti, c'est-à-dire dans un plan contenant l'axe X-X. Le sous-volume avant est ainsi délimité, à l'arrière, par la cloison 14, ainsi que, vers le haut, par une paroi de plafond 16 et, vers le bas, par une paroi de plancher 18. De plus, le sous-volume avant est subdivisé en deux compartiments latéraux, respectivement gauche 20 et droit 22 pour l'utilisateur observant l'appareil 1 par l'avant. A cet effet, les compartiments 20 et 22 sont séparés par une cloison verticale 24, s'étendant dans un plan diamétral au bâti 10, qui forme ici un plan de symétrie pour les compartiments 20 et 22. Le compartiment 20 est, sur son côté opposé à la cloison 24, fermé par une paroi latérale 26 qui, ici, correspond à une portion de la forme cylindrique du bâti 10. De manière symétrique par rapport à la cloison 24, une paroi latérale 28 ferme le compartiment droit sur son côté opposé à la cloison 24.

Les compartiments 20 et 22 sont dimensionnés pour respectivement recevoir les bouteilles 2 et 3 se tenant à la verticale, avec leur fond reposant en appui stable sur la paroi de plancher 18, tandis que leur col 4, 5 est dirigé vers la paroi de plafond 16. A cet effet, à l'avant du bâti 10, la cloison 24 et les parois 16 et 18 définissent, d'une part, avec la paroi 26, une ouverture 30 d'accès au compartiment 20 pour la bouteille 2 et, d'autre part, avec la paroi 28, une ouverture 32 d'accès au compartiment 22 pour la bouteille 3.

De manière optionnelle mais préférentielle, les compartiments 20 et 22 sont réfrigérés, c'est-à-dire qu'ils sont associés à un moyen de réfrigération, adapté pour abaisser les températures internes des compartiments par rapport à la température ambiante à l'extérieur du bâti 10. Ce moyen de réfrigération peut être d'un type connu ou, de préférence comme ici, se présente sous la forme d'un unique élément Pelletier 34, c'est-à-dire d'un unique élément thermo-électrique à même de convertir une énergie électrique en un flux thermique. Comme représenté sur les figures 1, 3 et 4, cet élément Pelletier 34 comporte un corps principal 36 de forme globalement parallélépipédique et rapporté fixement à la cloison 14, en traversant cette dernière de part en part et en s'étendant sur sensiblement toute la dimension horizontale de cette cloison. De manière non représentée sur les figures, le corps 36 contient des composants thermoélectriques à même de générer un flux thermique entre la face avant 38 froide et la face arrière 40 chaude du corps 36. A cet effet, chacune de ces faces 38 et 40 est constituée d'un échangeur de chaleur avec l'air, notamment sous la forme d'une structure métallique de radiateur.

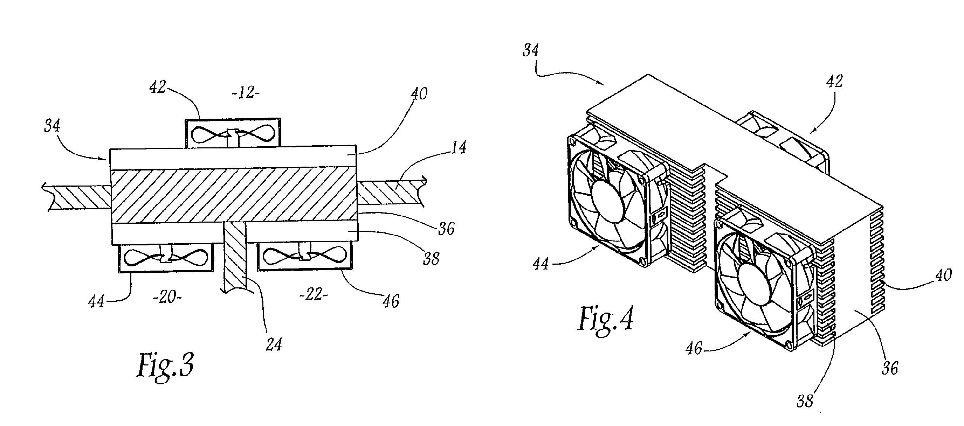

Sur sa face arrière 40, le corps 36 est équipé d'un bloc de ventilateur 42 qui brasse l'air du sous-volume arrière 12. Sur sa face avant 38, le corps 36 est pourvu de deux blocs de ventilateur 44 et 46, qui brassent l'air respectivement contenu dans les compartiments 20 et 22. A cet effet, la face avant 38 est creusée, dans sa partie médiane, d'une rainure verticale de réception de la cloison 24, comme bien visible à la figure 3. En service, la cloison 24 isole ainsi thermiquement l'un de l'autre les compartiments 20 et 22.

En prévoyant que les bouteilles 2 et 3 contiennent respectivement des vins de qualités différentes, dont la conservation optimale est liée à des températures de stockage respectives différentes, la structure de l'élément Pelletier 34 présente un intérêt notable. En effet, comme les compartiments 20 et 22 doivent alors présenter des températures internes différentes, la sollicitation thermique de la face avant 38 de l'élément 34 est dissymétrique de part et d'autre de la cloison 24. Autrement dit, si on considère l'exemple suivant lequel le compartiment 20 est à réfrigérer davantage que le compartiment 22, la partie de la face avant 38, munie du bloc de ventilateur 44 est bien plus sollicitée thermiquement que la partie de cette face 38 munie du bloc de ventilateur 46. Il en résulte une forte capacité de refroidissement pour le compartiment 20, en particulier une capacité de refroidissement supérieure à celle qui serait obtenue par un élément Pelletier standard à un seul ventilateur sur son côté froid, à consommation électrique constante.

Pour maintenir des températures sensiblement constantes dans les compartiments 20 et 22, le bâti 10 est équipé de deux portes mobiles 50 et 52. Chaque porte 50 et 52 est déplaçable par rapport au bâti, entre une position de fermeture de l'ouverture 30, 32, comme représenté pour le compartiment droit 22 sur les figures 1 et 2, et une position ouverte de libre accès à l'ouverture, comme représenté pour le compartiment gauche 20 sur les figures. Avantageusement, comme bien visible à la figure 2 sur laquelle de nombreux constituants de l'appareil, dont l'élément Pelletier 34, ne sont pas représentés par souci de clarté, chaque porte 50, 52 présente une forme globale en portion de cylindre, ajustée sur la forme extérieure cylindrique du bâti 10 et centrée sur l'axe X-X. De la sorte, chaque porte 50, 52 est montée sur le bâti 10, de manière à passer entre ses positions fermée et ouverte par un mouvement global de rotation autour de l'axe X-X. Ce mouvement de rotation est indiqué par une flèche 54 pour la porte 50 passant de sa position ouverte vers sa position fermée, tandis que le passage de la porte 52 de sa position fermée à sa position ouverte est indiqué par une flèche 56.

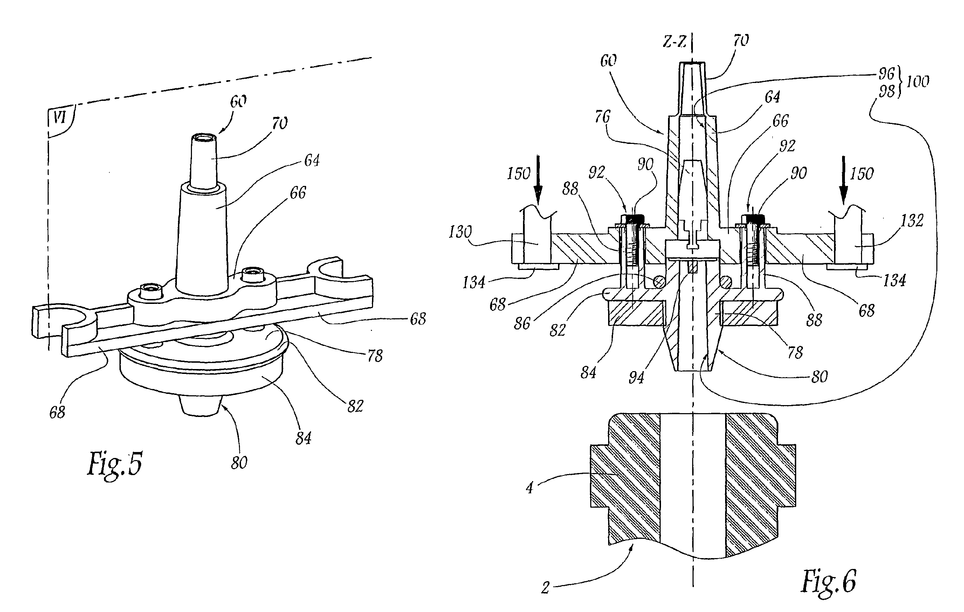

Chaque compartiment 20, 22 est équipé intérieurement d'une tête 60, 62 permettant, comme expliqué en détail ci-après, de tirer au vide la bouteille 2, 3, c'est-à-dire d'extraire une grande partie de l'air présent dans la partie supérieure de cette bouteille, entre la surface libre de vin qu'elle contient et l'extrémité supérieure de son col 4, 5. Les têtes 60 et 62 sont identiques l'une à l'autre, la tête 60 étant représentée plus en détail sur les figures 5 à 8, de sorte que, ci-dessous n'est décrite en détail que la tête 60, étant entendu que la tête 62 présente les mêmes aménagements.

Comme représenté sur les figures 5 et 6, la tête 60 comporte un corps principal tubulaire 64, d'axe central longitudinal Z-Z s'étendant, en service, suivant la verticale. A son extrémité inférieure, le corps 64 est entouré d'un bord extérieur 66, prolongé, de manière diamétralement opposée par rapport à l'axe Z-Z, par deux branches horizontales 68. L'extrémité supérieure du corps 64 forme une tubulure 70 de connexion à un conduit souple 72 (figures 1 et 2), raccordée, à l'opposé de la tête 60, à une pompe à vide électrique 6. Le conduit qui connecte la tête 62 à la même pompe à vide 6 est référencé 74 sur les figures 1 et 2. Sur les figures, la pompe à vide 6 est représentée de manière très schématique à des fins de compréhension de l'invention, étant entendu que, en pratique, elle est agencée et dissimulée dans le sous-volume arrière 12 du bâti 10, où elle est alimentée en électricité.

Dans sa partie courante, le corps 64 est munie intérieurement d'une valve 76 rapportée fixement, par exemple par vissage d'un filet extérieur de cette valve avec un taraudage intérieur du corps 64. La valve 76 étant une pièce disponible dans le commerce, elle n'est pas représentée en détail sur les figures, étant remarqué qu'elle est partiellement creuse de manière à mettre en communication fluidique, à travers elle, ses extrémités supérieure et inférieure dans des conditions spécifiques de sollicitation, détaillées ci-après.

La tête 60 comporte également une base 78 agencée essentiellement au-dessous du corps 64 et présentant une forme globalement tubulaire, centrée sur l'axe Z-Z. L'extrémité inférieure de cette base 78 est conformée en un tronc de cône et délimite ainsi une surface extérieure tronconique 80, centrée sur l'axe Z-Z et divergente vers le corps 64.

Dans sa partie courante, la base 78 est munie d'une bride extérieure annulaire 82, s'étendant sur toute la périphérie de la base. Sur son côté inférieur, la bride 82 est munie fixement d'un joint plat 84, centré sur l'axe Z-Z et sur lequel débouche vers le haut la surface tronconique 80. Sur son côté supérieur, la bride 82 est munie d'un joint torique 86, centré sur l'axe Z-Z et ajusté autour du corps tubulaire de la base 78.

Sur son côté supérieur, la bride 82 est également équipée, de manière fixe, de deux pions verticaux 88 diamétralement opposés par rapport à l'axe Z-Z. Les pions 88 assurent l'assemblage de la base 78 au corps 64 et sont à cet effet reçus de manière coulissante dans deux trous complémentaires 90 traversant verticalement de part en part les branches 78. La base 78 est ainsi déplaçable en translation suivant l'axe Z-Z par rapport au corps 64, par coopération coulissante de chaque pion 88 avec son trou 90. Les déplacements translatifs entre le corps 64 et la base 78 sont limités, vers le bas, par la bride 82 contre laquelle la face inférieure des branches 78 peut venir buter et, vers le haut, par des vis 92 rapportées fixement à l'extrémité supérieure des pions 88 et contre la tête desquelles peut venir buter la face supérieure des branches 78, avec interposition d'une rondelle.

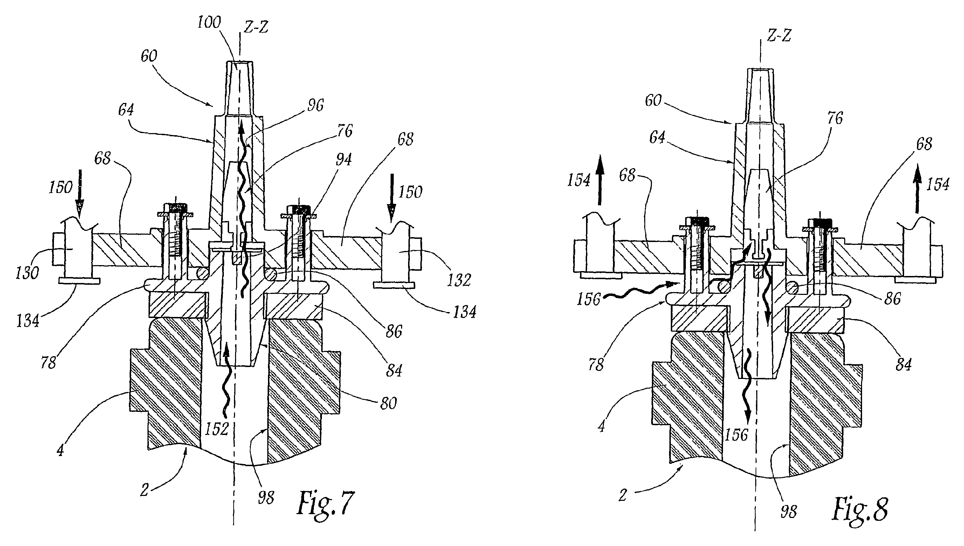

Par rapport au corps 64, la base 78 est ainsi déplaçable entre une position extrême basse, représentée sur la figure 6 et dans laquelle la base et le corps sont écartés l'un de l'autre, l'extrémité supérieure de la base étant reçue de manière non étanche dans le débouché inférieur du corps 64, et une position extrême haute, représentée sur la figure 7 et dans laquelle la base et le corps sont appuyés verticalement l'un contre l'autre, avec interposition du joint 86 qui étanche alors la connexion entre le débouché supérieur de la base 78 et le débouché inférieur du corps 64. Dans cette position haute, l'extrémité inférieure de la valve 76 est appuyée contre un pontet horizontal de matière 94 s'étendant en travers du débouché supérieur de la base 78, de sorte que, par le biais d'aménagements, non représentés, internes à la valve 76, l'orifice central traversant 96 du corps 64 est mis en communication fluidique, à travers la valve, avec l'orifice central traversant 98 de la base 78. Ces deux orifices 96 et 98 forment alors un passage d'aspiration d'air 100 entre l'extrémité inférieure de la base 78 et l'extrémité supérieure du corps 64. Dans la position basse de la base 78, l'extrémité inférieure de la valve 76 est distante du pontet 94, de sorte que, par le biais des aménagements internes précités, la valve 76 isole hermétiquement l'un de l'autre les orifices 96 et 98, ce qui revient à fermer le passage 100.

L'appareil 1 comporte en outre des moyens mécaniques 110 de déplacement de la tête 60 par rapport au bâti 10, représentés sur la figure 1 mais non repris sur la figure 2. En pratique, les moyens 110 sont doublés pour, respectivement et de manière indépendante, déplacer la tête 60 et la tête 62, étant entendu que chaque exemplaire de ces moyens 110 présente une structure identique, agencée respectivement dans les compartiments 20 et 22. Ci-après, on décrit en détail les moyens 110 associés au compartiment 20, étant entendu que les moyens 110 associés au compartiment 22 sont constitués des mêmes composants que ceux décrits ci-dessous et sont pointés par les mêmes références numériques sur les figures.

Comme représenté sur la figure 1, ces moyens 110 comportent une barre horizontale 112, dont les extrémités longitudinales sont respectivement reçues dans des glissières verticales 114 et 116, respectivement fixées à la paroi 26 et à la cloison 24. La coopération des extrémités longitudinales de la barre 112 et de ces glissières 114 et 116 permet de guider verticalement la barre 112 par rapport au bâti 10.

Pour entraîner mécaniquement la barre 112 par rapport au bâti 10, les moyens 110 comportent des éléments de transmission de mouvement entre la barre et la porte correspondante 50. En particulier, dans l'exemple de réalisation considéré ici, ces éléments de transmission sont prévus pour transformer le mouvement rotatif de la porte 50 autour de l'axe X-X entre ses positions ouverte et fermée, en un mouvement de translation verticale. A cet effet, les éléments de transmission précités incluent, par exemple, une vis sans fin verticale 118 qui est liée en rotation sur elle même à la porte 50, qui est en prise avec un curseur taraudé 120 solidaire du bâti 10, et dont une extrémité est solidarisée fixement à la barre 112. De la sorte, lorsque la porte 50 passe de sa position ouverte à sa position fermée, la vis 118 se translate de manière à déplacer la barre 112 d'une position haute, telle que présentée dans le compartiment 20, à une position basse, telle que représentée dans le compartiment 22. A l'inverse, lorsque la porte 50 passe de sa position fermée à sa position ouverte, la barre 112 est déplacée de sa position basse à sa position haute, par réversibilité de la transmission de mouvement par la vis 118. Bien entendu, d'autres formes de réalisation des éléments de transmission sont envisageables.

Les moyens de déplacement 110 comportent en outre deux tiges verticales 130 et 132 reliant la barre 112 à la tête 60. Chaque tige 130, 132 est montée coulissante verticalement à travers, à la fois, la barre 112 et l'une des branches 68 du corps 64. Des moyens de blocage en translation, tels que des circlips 134, empêchent chaque tige de se désengager de la barre 112 vers le bas et de se désengager des branches 68 vers le haut. La barre 112 et le corps 64 sont normalement écartés l'un de l'autre verticalement par un ressort 136 interposé entre eux, en étant avantageusement agencé autour d'une des tiges 130 et 132.

L'utilisation de l'appareil 1 va être maintenant décrite.

Initialement, on considère que le compartiment 20 est vide, avec sa porte correspondante 50 ouverte. L'utilisateur, qui a débouché la bouteille 2 et qui n'a consommé qu'une partie du vin qu'elle contient, place manuellement cette bouteille dans le compartiment 20, à l'aplomb vertical de la tête 60. L'utilisateur est avantageusement aidé pour positionner de manière adéquate la bouteille vis-à-vis de la tête, par un élément 140 solidaire du bâti 10 et conformé à cette fin. Dans l'exemple de réalisation considéré aux figures, cet élément de positionnement 140 se présente sous la forme d'une fourche entre les branches avant de laquelle la bouteille 2 est introduite, en étant progressivement centrée entre ces branches lorsque la bouteille est poussée vers l'arrière par l'utilisateur, jusqu'à buter contre le fond de la zone de jonction entre ces branches, comme représenté sur les figures 1 et 2. Dans cette position prédéterminée fixe de la bouteille 2, le col 4 est situé verticalement au-dessous de la base 78 de la tête 60, comme représenté sur les figures 1 et 6.

Après s'être dessaisi de la bouteille 2, qui repose de manière stable par son fond sur la paroi de plancher 18, l'utilisateur fait passer la porte 50 dans sa position fermée. En pratique, l'utilisateur entraîne manuellement cette porte, notamment de la même main que celle avec laquelle il a préalablement placé la bouteille dans le compartiment 20, ou, en variante, il appuie avec l'un des doigts de cette main sur un interrupteur de commande d'une motorisation, notamment électrique, d'entraînement de la porte 50. Cette porte passe ainsi de sa position ouverte à sa position fermée, par rotation autour de l'axe X-X, comme indiqué par la flèche 54. Ce mouvement de rotation est transmis, notamment par la vis 118, à la barre 112 sous forme d'un mouvement de translation vers le bas, pour déplacer cette barre de sa position haute à sa position basse. Ce mouvement de translation vers le bas de la barre 112 est transmis, par le ressort 136, au corps 64 de la tête 60, comme indiqué par les flèches 150 aux figures 2 et 6. Le déplacement vers le bas du corps 64 provoque un déplacement correspondant de la base 78, par appui de la face inférieure des branches 68 contre la face supérieure de la bride 82, jusqu'à ce que la base 78 se trouve pressée contre le col 4 de la bouteille 2, comme représenté sur la figure 7. Plus précisément, lorsque la base 78 se trouve à proximité immédiate du col 4, sa surface tronconique 80 s'introduit verticalement vers le bas à l'intérieur du col, de sorte que, par contact glissant entre cette surface 80 et la face intérieure du col, ce dernier se trouve progressivement centré sur la tête 60, c'est-à-dire que son axe longitudinal tend à s'aligner avec l'axe Z-Z. Dans la configuration de la figure 7, la tête 60 et la bouteille 2 sont ainsi centrées l'une sur l'autre, avec le joint 84 verticalement interposé et pressé entre le col 4 et la bride 82 de la base 78.

On comprend que le ressort 136 présente une raideur importante, dans le sens où il transmet, sans sensiblement se comprimer, l'effort d'entraînement vers le bas entre la barre 112 et le corps 64, jusqu'à plaquer fermement la base 78 contre le col 4. Le déplacement vers le bas des tiges 130 et 132 peut, le cas échéant, être poursuivi, notamment tant que la porte 50 n'a pas atteint sa position fermée. Le ressort 136 accommode alors la surcourse de la barre 112 par rapport à la base 78, en se comprimant. La tête 60 est ainsi efficacement mise en place sur le col 4 quelque soit la hauteur de la bouteille 2, c'est-à-dire la distance verticale entre l'extrémité supérieure de son col et la paroi de plancher 18. L'appareil 1 gère ainsi automatiquement des bouteilles de hauteurs différentes.

Dans la configuration de la figure 7, comme expliqué plus haut, la valve 76 ouvre le passage d'aspiration 100. En actionnant alors la pompe à vide 6, l'air contenu dans la partie haute de la bouteille 2 est aspiré à travers ce passage, comme indiqué par les flèches 152 à la figure 7, de sorte que la bouteille est tirée au vide. En pratique, le niveau de vide atteint dans la bouteille, par rapport à la pression atmosphérique, doit excéder 0,1 bar pour se situer autour de 0,3 bar.

On notera que l'actionnement de la pompe à vide 6 peut avantageusement être commandé par la porte 50, en particulier lorsque cette dernière atteind sa position de fermeture, repérée par un contacteur de fin de course, relié électriquement à cette pompe. En variante, des capteurs détectant la résistance à la descente de la tête 60 lorsqu'elle est appuyée contre le col 4 peuvent être utilisés pour commander la pompe.

On comprend que l'utilisateur n'a pas à attendre que le vide se fasse dans la bouteille 2, dans le sens où, une fois qu'il a commandé la fermeture de la porte 50, il est libre de s'éloigner de l'appareil 1, pour d'autres tâches.

La bouteille 2 est alors conservée de manière efficace par l'appareil 1, la tête 60 étant maintenue fermement en appui étanche contre le col 4 par les moyens 110. Optionnellement, la pompe à vide 6 est régulièrement ré-actionnée. La conservation de la bouteille est améliorée par le rafraîchissement de l'ambiance interne du compartiment 20.

Lorsque l'utilisateur souhaite consommer le restant de vin contenu dans la bouteille 2, il ouvre la porte 50, soit en l'entraînant manuellement, soit en commandant son mouvement par une motorisation associée, commandée par un interrupteur. Le déplacement en rotation autour de l'axe X-X de la porte entre ses positions fermée et ouverte, en sens inverse à la flèche 54, entraîne la barre 112 vers le haut, comme indiqué par les flèches 154 sur la figure 8. Dans un premier temps, si besoin après décompression du ressort de surcourse 136, le corps 64 est entraîné vers le haut par la barre 112, par l'intermédiaire des tiges 130 et 132, sans que ne soit entraînée de manière correspondante la base 78, comme illustré à la figure 8. Comme expliqué plus haut, la valve 76 se ferme alors, tandis que de l'air extérieur contourne le joint 86 pour pénétrer dans l'orifice 98 et ainsi remettre en pression l'intérieur de la bouteille 2, comme indiqué par les flèches 156 à la figure 8. De la sorte, le soulèvement vers le haut de la tête 60 n'entraîne pas par effet ventouse un soulèvement correspondant de la bouteille 2 et le vide est maintenu dans les conduits 72 et 74, ainsi que dans la bouteille 3.

En poursuivant son soulèvement vers le haut, la barre 112 entraîne, par l'intermédiaire des tiges 130 et 132, le corps 64 puis, lorsque la face supérieure des branches 68 vient buter contre la tête des vis 92, la base 78. La tête 60 est ainsi entraînée vers le haut, jusqu'à retrouver sa configuration initiale. L'utilisateur peut alors se saisir de la bouteille 2 et la sortir du compartiment 20.

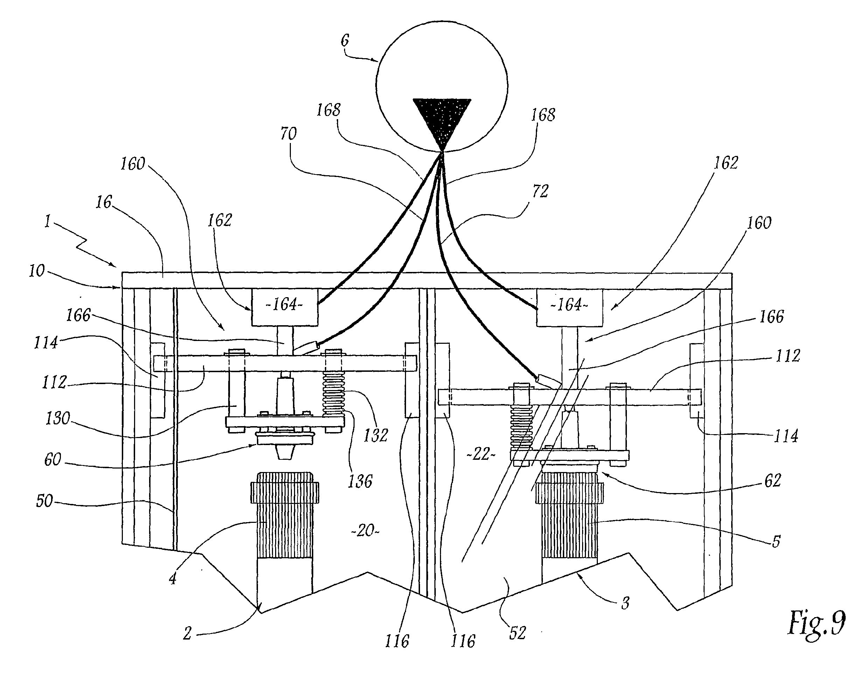

Sur la figure 9 est représentée une variante de l'appareil 1, qui ne se distingue de celui des figures 1 à 8 que par la forme de ses moyens 160 de déplacement de chaque tête 60, 62 par rapport au bâti 10, en remplacement des moyens 110. Comme représenté sur la figure 9, ces moyens 160 comportent, pour chaque compartiment 20, 22, un vérin pneumatique 162, dont la partie fixe 164 est solidarisée au bâti, par exemple à la paroi de plafond 16, tandis que sa tige mobile 166 est solidarisée à la barre 112. L'intérêt de cette variante est de pouvoir commander chaque vérin 162 par la pompe à vide 6, sa partie fixe 164 étant raccordée à cette pompe par un conduit spécifique 168 et intégrant un ressort de rappel non représenté sur les figures. En pratique, l'actionnement des vérins 162 peut être avantageusement commandé par l'action d'ouverture/fermeture des portes 50 et 52.

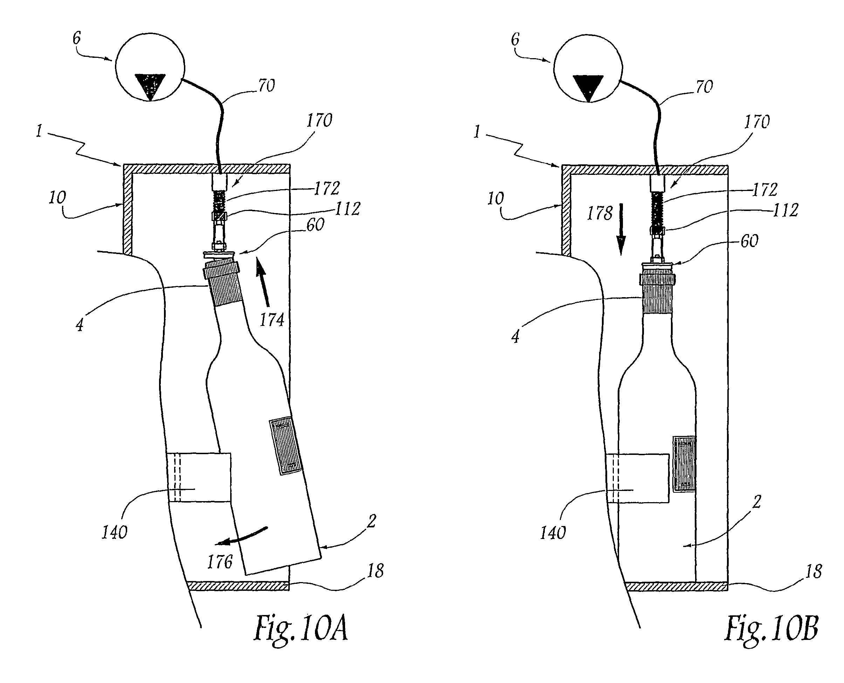

Sur les figures 10A et 10B est représentée une autre variante 170 des moyens de déplacement de chaque tête 60, 62 par rapport au bâti 10 de l'appareil 1. Plutôt que de prévoir un entraînement mécanique ou pneumatique de la barre 112, comme avec les moyens de déplacement 110 et 160 envisagés ci-dessus, un ressort de compression 172 est interposé verticalement entre la barre 112 et le bâti 10, notamment sa paroi de plafond 16. Ce ressort 172 est apte à être comprimé par l'utilisateur lorsque ce dernier introduit la bouteille 2 dans le compartiment 20, en amenant le col 4 de cette bouteille autour de la surface 80 de la tête 60. En effet, le bâti 10 est dimensionné pour que l'utilisateur soit contraint de comprimer le ressort 172 pour pouvoir placer le fond de la bouteille en appui contre la paroi de plancher 18. Pour ce faire, comme représenté sur la figure 10A, l'utilisateur introduit la bouteille 2 dans le compartiment 20 de manière inclinée par rapport à la verticale, puis, tout en la déplaçant vers le haut pour comprimer le ressort 172, comme indiqué par la flèche 174, la bascule vers l'arrière, comme indiqué par la flèche 176, pour la redresser verticalement. Une fois que la bouteille s'étend ainsi à la verticale et que son fond repose sur la paroi de plancher 18, le ressort 172 se détend partiellement, comme indiqué par la flèche 178, tout en maintenant plaquée en appui étanche la tête 60 contre le col 4, comme représenté sur la figure 10B.

Le dégagement de la bouteille 2 s'effectue par une manipulation inverse, étant remarqué que la nécessité d'incliner vers l'avant le fond de la bouteille par rapport au col 4 facilite la reprise d'air à travers le col et limite donc l'effet ventouse.

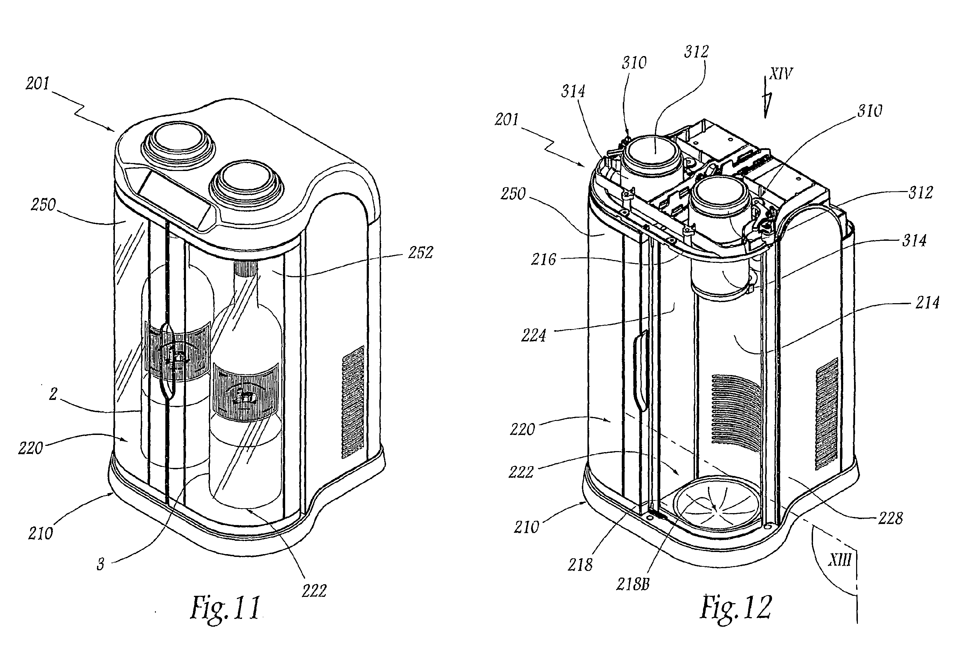

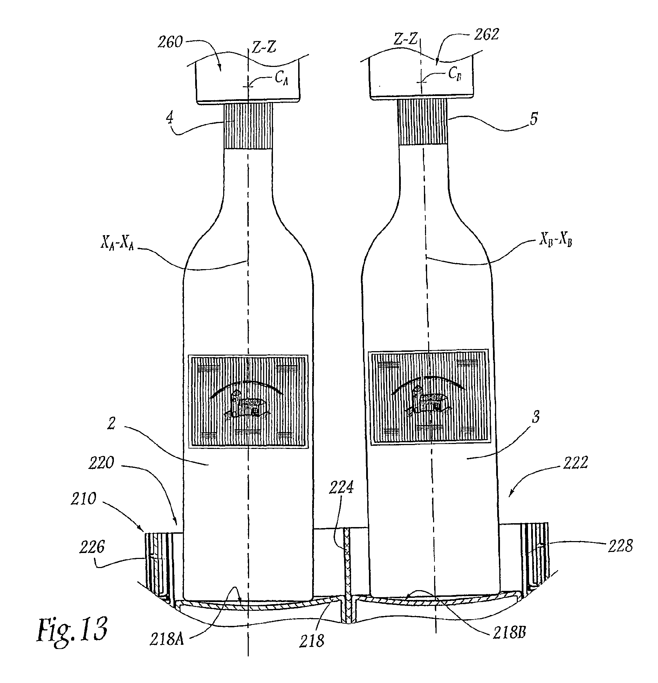

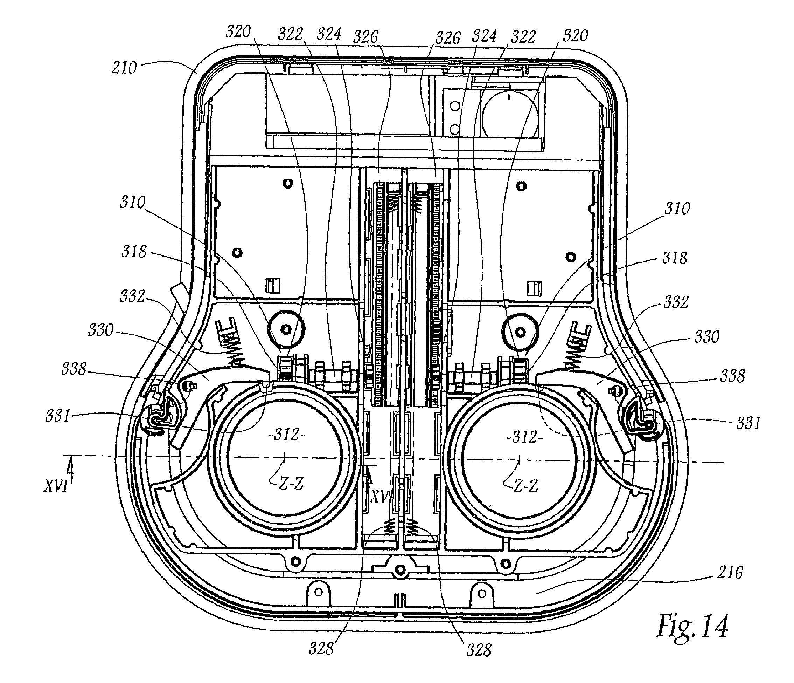

Sur les figures 11 à 18 est représenté un autre exemple d'un appareil ménager 201 que l'appareil 1 considéré jusqu'ici, permettant lui aussi de conserver deux bouteilles de vin, analogues aux bouteilles 2 et 3 considérées jusqu'ici. L'appareil 201 comporte un bâti 210 de rangement de ces bouteilles, qui, à la différence du bâti 10 de l'appareil 1, présente une forme extérieure plus complexe qu'une forme cylindrique, ce qui illustre la multiplicité des géométries de bâtis que recouvre la présente invention. Globalement, en reprenant les mêmes conventions d'orientation que celles introduites pour le bâti 10, le volume intérieur du bâti 210 est divisé en un sous volume arrière, non visible sur les figures, et en un sous-volume avant lui-même subdivisé en un compartiment gauche 220 et un compartiment droit 222. Comme bien visible sur les figures 12 et 13, les compartiments 220 et 222 sont séparés par une cloison verticale 224 s'étendant depuis une paroi de plancher 218 jusqu'à une paroi de plafond 216, le long d'une cloison intermédiaire 214 entre les sous-volumes arrière et avant. Les compartiments 220 et 222 sont respectivement fermés, sur leur côté opposé à la cloison 224, par des parois latérales respectives 226 et 228 et, à l'avant, par des portes respectives 250 et 252. Sur la figure 12, la porte 252 et les bouteilles 2 et 3 ne sont pas représentées pour des raisons de visibilité.

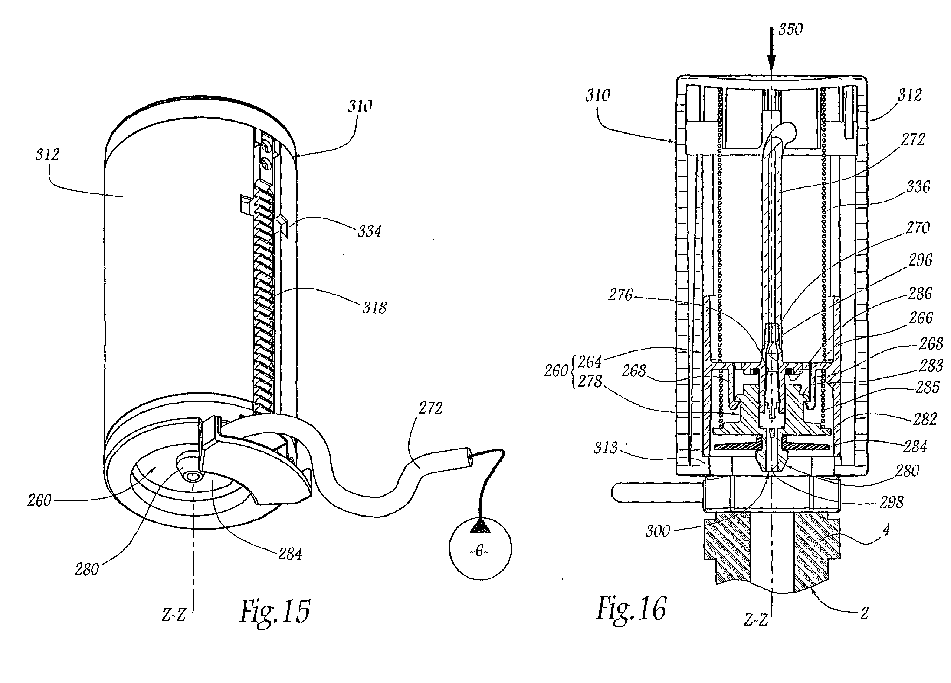

Chaque compartiment 220, 222 est associé à une tête 260, 262 de tirage au vide d'une bouteille. Comme pour l'appareil 1, les têtes 260 et 262 de l'appareil 201 sont identiques l'une à l'autre, la tête 260 étant représentée plus en détail sur les figures 15 et 16.

De la même façon que les compartiments 20 et 22 de l'appareil 1, les compartiments 220 et 222 sont dimensionnés pour permettre respectivement aux bouteilles 2 et 3 d'y accéder et de s'y tenir à la verticale, avec leur fond reposant en appui stable sur la paroi de plancher 218. Cette paroi de plancher 218 présente un aménagement optionnel, qui pourrait d'ailleurs être mis en oeuvre dans l'appareil 1 et qui consiste à conformer la face supérieure de la paroi 218 en des calottes sphériques concaves 218A et 218B, respectivement associées aux compartiments 220 et 222. Comme bien visible sur la figure 13, chaque calotte 218A, 218B présente un axe de révolution X_{A}-X_{A}, X_{B}-X_{B} sensiblement vertical. Le centre géométrique C_{A}, C_{B} de chaque calotte 218A, 218B est situé dans la zone occupé par le col 4, 5 de la bouteille 2, 3 lorsque cette dernière repose en appui sur la paroi de plancher 218. Autrement dit, le rayon de courbure de chaque calotte est sensiblement égal à la hauteur des bouteilles 2 et 3. De cette façon, lorsque la bouteille n'est pas posée de manière centrée autour de l'axe X_{A}-X_{A} ou X_{B}-X_{B}, comme représenté pour la bouteille 2 sur la figure 13, la bouteille repose en appui sur la calotte 218A, 218B de manière légèrement inclinée par rapport à l'axe précité de telle sorte que son goulot 4, 5 soit globalement centré sur le centre C_{A}, C_{B}. Ainsi, quel que soit l'emplacement précis de la bouteille 2, 3 sur la calotte 218A, 218B, le col 4, 5 de cette bouteille occupe la même position par rapport au bâti 210, dans laquelle la tête de tirage au vide correspondante 260, 262, détaillée ci-après, peut alors coopérer de manière efficace et fiable. En particulier, en prévoyant que les axes X_{A}-X_{A} et X_{B}-X_{B} sont sensiblement alignés avec les axes centraux respectifs Z-Z des têtes 260 et 262, chaque tête peut être plaquée contre le col de la bouteille correspondante de manière efficace, quelle que soit la position exacte de la bouteille sur la calotte correspondante 218A, 218B.

Comme représenté en détail sur la figure 16, la tête 260 comporte un corps principal tubulaire 264, d'axe central longitudinal Z-Z sensiblement vertical. Dans sa partie intermédiaire, le corps 264 est muni intérieurement d'une paroi horizontale 266 qui occupe un plan diamétral du corps. Cette paroi 266 est munie de bras verticaux 268 s'étendant en saillie vers le bas depuis la face inférieure de la paroi 266, ces bras 268 étant notamment répartis de manière régulière autour de l'axe Z-Z. L'extrémité supérieure du corps 264 forme une tubulure 270 de connexion à un conduit souple 272, raccordé, à l'opposé de la tête 260, à une pompe à vide analogue à la pompe 6 évoquée en relation avec l'appareil 1. Par commodité, cette pompe est également référencée 6 pour l'appareil 201, comme représenté sur la figure 15, étant entendu que cette pompe peut être agencée de la même manière que décrit précédemment en ce qui concerne l'appareil 1.

Dans sa partie courante, le corps 264 est muni intérieurement d'une valve 276 analogue à la valve 76 décrite plus haut.

La tête 260 comporte également une base 278 agencée essentiellement au-dessous du corps 264 et présentant une forme globalement tubulaire centrée sur l'axe Z-Z.

L'extrémité inférieure de cette base 278 est conformée de manière analogue à celle de la base 78, c'est-à-dire en un tronc de cône, en délimitant ainsi une surface extérieure tronconique 280, centrée sur l'axe Z-Z et divergente vers le corps 264, avec les mêmes avantages que ceux expliqués plus haut pour l'appareil 1.

La base 278 est extérieurement munie de deux bords annulaires s'étendant sur toute la périphérie de la base, à savoir un bord inférieur 282 et un bord supérieur 283. Un ressort de compression 285 est interposé, suivant la direction de l'axe Z-Z, entre le bord 282 et la paroi 266. Le bord 283 est, quant à lui, adapté pour s'appuyer vers le bas contre les extrémités libres des bras 268, sous l'action du ressort 285 qui tend ainsi à écarter vers le bas la base 278 par rapport au corps 264.

Sur son côté inférieur, la base 278 est munie fixement d'un joint 284 essentiellement plat, centré sur l'axe Z-Z et sur lequel débouche vers le haut la surface tronconique 280. A la différence du joint 84 de l'appareil 1, dont la totalité de la face supérieure est au contact de la base 78, l'essentiel de la face supérieure du joint 284 est distant de la base 278, ménageant ainsi entre-eux un écartement axial non négligeable, excepté dans la partie centrale du joint. De cette façon, en réalisant le joint 284 en une matière élastique, ce joint forme une lèvre souple à même d'être déformée en des proportions différentes suivant sa périphérie par la face d'extrémité supérieure du col 4, 5 de la bouteille 2, 3 lorsque la tête 260, 262 est plaquée en appui étanche contre ce col. Cette conformation du joint 284 en une lèvre d'étanchéité souple permet aux têtes 260 et 262 de s'adapter à divers diamètres de col de bouteille, sans altérer en service la qualité du contact étanche entre ces têtes et les cols de bouteille.

Un joint d'étanchéité torique 286, centré sur l'axe Z-Z, est interposé entre la face d'extrémité supérieure de la base 278 et la paroi 266 du corps 264. Dans la forme de réalisation illustrée sur les figures, le joint 286 est fixé à la face inférieure de la paroi 266, en étant logé dans une rainure complémentaire. Ce joint 286 est fonctionnellement analogue au joint 86 des têtes 60 et 62 de l'appareil 1.

De la même façon que la base 78 est déplaçable par rapport au corps 64 dans les têtes 60 et 62 de l'appareil 1, la base 278 est déplaçable par rapport au corps 264 entre une position extrême basse, représentée sur la figure 16 et dans laquelle la base et le corps sont écartés l'un de l'autre sous l'action du ressort de compression 285, et une position extrême haute, non représentée et dans laquelle la base et le corps sont appuyés verticalement l'un contre l'autre avec interposition du joint 286 qui étanche la connexion entre le débouché inférieur du corps 264 et le débouché supérieur de la base 278. La valve 276 agit de la même façon que la valve 76 : dans la position haute précitée, les orifices centraux traversants 296 et 298, respectivement délimités par le corps 264 et la base 278, sont mis en communication fluidique à travers la valve et forment alors un passage d'aspiration d'air 300 entre les extrémités inférieure et supérieure de la tête 260, 262, tandis que, dans la position basse précitée, la valve 276 isole hermétiquement l'un de l'autre les orifices 296 et 298, ce qui revient à fermer le passage 300.

Par ailleurs, en comparaison des moyens 110, 160 ou 170 de déplacement des têtes 60 et 62 pour l'appareil 1, l'appareil 201 comporte d'autres moyens 310 de déplacement de chacune de ces têtes 260 et 262 par rapport au bâti 210. Chaque tête 260, 262 est ainsi associée à un boîtier cylindrique 312 centré sur l'axe Z-Z. Le corps 264 de la tête 260 ou 262 est disposé à l'intérieur de ce boîtier 312, en étant plaqué en butée contre un rebord interne d'extrémité inférieure 313 par un ressort de compression 336 interposé entre la paroi 266 du corps 264 et une partie d'extrémité supérieure du boîtier 312. Chaque boîtier 312 est assemblé au bâti 210 de manière mobile suivant une direction verticale. Dans l'exemple de réalisation considéré, chaque boîtier 312 est reçu de manière coulissante dans un fourreau vertical 314 solidaire de la paroi de plafond 216. Chaque fourreau présente un diamètre intérieur ajusté au diamètre extérieur du boîtier 312, pour guider efficacement le cylindre lors de son déplacement par rapport au bâti 210.

En outre, sur son côté arrière, chaque cylindre 312 est muni fixement d'un crémaillère 318 engrenant avec une roue dentée 320 portée par l'extrémité d'un arbre 322 supporté par le côté supérieur de la paroi de plafond 216. L'extrémité opposée de cet arbre 322 porte une roue dentée 324 avec laquelle engrène une crémaillère horizontale 326. Cette crémaillère 326 est supportée par le côté supérieur de la paroi de plafond 216, de manière mobile suivant un mouvement de translation horizontale et antéro-postérieure. Un ressort de traction 328 est interposé entre la crémaillère 326 et une partie fixe de la paroi de plafond 216, de telle sorte que lorsque le boîtier 312 est translaté vers le bas, son mouvement est transmis jusqu'au ressort 328 par successivement la roue 320, l'arbre 322, la roue 324 et la crémaillère 326, de manière à bander le ressort 328. Autrement dit, le ressort 328 tend à maintenir mécaniquement le boîtier 312 dans une position translatée vers le haut par rapport au bâti 210.

Pour maintenir le boîtier 312 dans une position translatée vers le bas, c'est-à-dire pour neutraliser l'action du ressort 328, le bâti 210 est muni, pour chaque boîtier 312, d'un bras basculant 330 dont une extrémité 331 est introduite, sous l'action d'un ressort de compression 332, dans une encoche complémentaire 334 délimitée dans la partie haute du boîtier 312, comme bien visible sur la figure 15.

L'utilisation de l'appareil 201 est sensiblement analogue à celle de l'appareil 1. Ci-dessous, on insiste essentiellement sur les différences d'utilisation entre ces deux appareils.

Initialement, on considère par exemple que le compartiment 220 est vide, avec sa porte correspondante 250 ouverte. L'utilisateur place manuellement la bouteille 2 dans le compartiment 220, en la faisant reposer sur la calotte 218A, le col 4 de cette bouteille se trouvant alors sensiblement centré sur le centre C_{A} quelle que soit l'éventuelle inclinaison de la bouteille par rapport à l'axe Z-Z comme expliqué plus haut. La tête 260 et son boîtier 312 sont alors configurée vis-à-vis du bâti 210 et de la bouteille 1 comme représenté sur la figure 16.

L'utilisateur fait ensuite passer la porte 250 dans sa position fermée, puis il pousse manuellement vers le bas le boîtier 312, comme indiqué par la flèche 350 à la figure 16. Ce mouvement de translation vers le bas du boîtier 312 est transmis par le ressort 336 au corps 264 de la tête 260, ce corps entraînant à son tour la base 278 par transmission du mouvement de translation vers le bas par le ressort 285, et ce jusqu'à ce que cette base se trouve pressée contre le col 4 de la bouteille 2, comme décrit en détail plus haut pour la tête 60 de l'appareil 1.

L'utilisateur poursuit l'entraînement vers le bas du boîtier 312 jusqu'à ce que l'extrémité 331 du bras 330 s'introduise dans l'encoche 334, sous l'action du ressort 332. Le bras 330 maintient ainsi le boîtier 312 dans une position translatée basse par rapport au bâti 210, comme représenté sur les figures 11 à 13. Le ressort 336 accommode la sur-course correspondante du boîtier 312 par rapport à la base 278, en se comprimant.

En actionnant alors la pompe à vide 6, l'air contenu dans la partie haute de la bouteille 2 est aspiré à travers le passage 300, de sorte que la bouteille est tirée au vide. En pratique, l'actionnement de la pompe à vide 6 peut être commandé des diverses façon évoquées plus haut pour l'appareil 1.

Lorsque l'utilisateur souhaite consommer le restant de vin contenu dans la bouteille 2, il ouvre la porte 250. Avantageusement, le basculement de la porte vers sa position ouverte entraîne le dégagement automatique du bras 330 vis-à-vis de l'encoche 334, par l'intermédiaire d'une came 338 liée cinématiquement à la porte. A défaut de cet aménagement, l'utilisateur commande manuellement le basculement du bras 330, par exemple par l'intermédiaire d'une touche, non représentée, facilement accessible à l'un des doigts de l'utilisateur lorsque la porte 250 est ouverte. Le ressort 328 se libère alors, entraînant vers le haut le boîtier 312 par, successivement, la crémaillère 326, la roue 324, l'arbre 322, la roue 320 et la crémaillère 318. L'appareil 210 se retrouve alors dans sa configuration initiale considérée plus haut.

La comparaison des utilisations respectives des appareils 1 et 201 fait comprendre que, dans le cas de l'appareil 1, le déplacement des têtes 60 et 62 est couplé mécaniquement à l'ouverture/fermeture des portes 50 et 52, tandis que pour l'appareil 201, le déplacement des têtes 260 et 262 est désaccouplé de l'ouverture/fermeture des portes 250 et 252, sauf pour ce qui concerne éventuellement le déverrouillage automatique des boîtiers 312 par action des cames optionnelles 338.

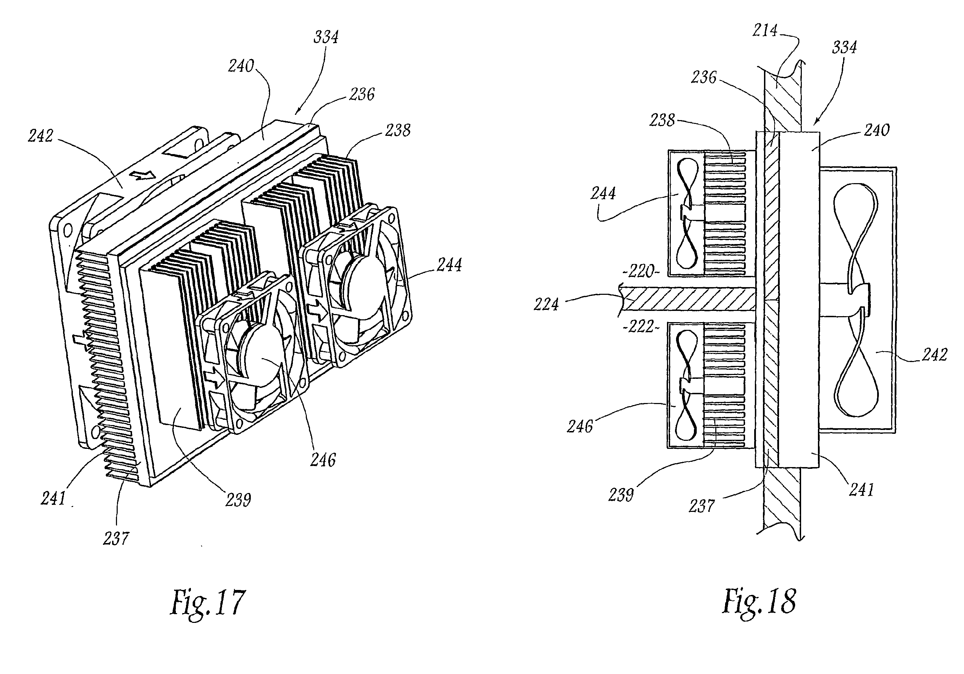

Les figures 17 et 18 représentent en détail le moyen de réfrigération de l'appareil 210, étant entendu que ce moyen de réfrigération pourrait être agencé dans l'appareil 1 en remplacement de l'élément Peltier 34. Ici, le moyen de réfrigération se présente sous la forme d'un double élément Peltier 234. Plus précisément, deux corps principaux d'élément Peltier 236 et 237 sont rapportés, de manière adjacente l'un à l'autre, fixement à la cloison 214, en traversant cette cloison de part en part. Chaque face avant froide 238, 239 des corps 236 et 237 est équipée d'un bloc de ventilateur 244, 246, la cloison 224 étant agencée entre eux. Avantageusement, les faces arrières chaudes 240 et 241 des corps 236 et 237 sont équipées d'un bloc de ventilateur commun 242.

L'utilisation du double élément Peltier 234 présente un réel intérêt pour limiter sa consommation électrique lorsque les deux compartiments 220 et 222 doivent présenter des températures internes différentes. Dans ce cas, il peut s'avérer suffisant de n'alimenter en énergie électrique qu'un seul des deux corps 236 et 237, à savoir celui associé au compartiment dans lequel la température doit être la plus basse. Le froid alors produit dans ce compartiment tend à gagner l'autre compartiment, à travers la cloison 224 et, par brassage de l'air grâce au bloc de ventilateur 244 ou 246 de ce compartiment plus chaud, la température souhaitée pour ce compartiment peut être atteinte sans alimenter en énergie électrique le corps d'élément Peltier correspondant.

Divers aménagements et variantes aux appareils 1 et 201 décrits ci-dessus sont par ailleurs envisageables. A titre d'exemples :
- les portes 50 et 52 et 250 et 252 peuvent présenter d'autres formes que celle considérée aux figures, tout comme être déplaçables suivant diverses cinématiques, en prévoyant par exemple qu'elles soient battantes, relevantes, coulissantes, télescopiques, etc. ;
- dans une version simplifiée de l'appareil 1 ou 201, ce dernier peut être dépourvu de son moyen de réfrigération, tel que l'élément Pelletier 34 ou le double élément Pelletier 234, et de ses portes 50 et 52 ou 250 et 252, sans constitution de compartiment de stockage des bouteilles ; dans ce cas, les déplacement des têtes de tirage au vide 60 et 62 ou 260 et 262 sont commandés par un actionnement se substituant à la fermeture/ouverture des portes, notamment par l'actionnement d'un moyen de commande spécifique porté par le bâti 10 ou 210, ce dernier présentant alors la forme simplifiée d'une potence de support des têtes et de leurs moyens de déplacement ;
- dans une autre version de l'appareil 1, celui-ci est intégré à l'intérieur d'une armoire de conservation de bouteilles, notamment de bouteilles de vin ; le bâti 10 est alors intégré dans une zone spécifique du volume interne de l'armoire, de préférence dans la partie interne, éventuellement bombée, de la porte d'accès à ce volume interne ; ainsi, dans le cas d'une porte transparente, l'utilisateur a une vision directe et claire de la ou des bouteilles dont le col est muni de la ou d'une des têtes de tirage au vide : le vide est fourni par une pompe située à l'extérieur de l'armoire, par exemple dans le compartiment dédié au compresseur du circuit froid de l'armoire, et est amené jusqu'aux têtes par un ou des conduits internes à l'armoire, partiellement agencés dans la zone de charnière de la porte ; dans ce cas, les têtes sont préférentiellement entraînées par du vide, comme dans le mode de réalisation de la figure 9, ce qui évite d'agencer une arrivée de courant électrique dans la porte de l'armoire, limitant les risques sécuritaires relatifs à un cordon électrique qui serait soumis à des flexions lors de la manoeuvre de la porte ; la mise à l'air des têtes peut être commandée soit pas l'ouverture de la porte, soit par l'appui sur une touche intérieure ou extérieure à l'armoire ;

- en plus d'être utilisé pour déplacer les têtes 60 et 62 comme dans la variante de la figure 9, le vide fourni par la pompe 6 peut être utilisé pour entraîner en déplacement les portes 50 et 52 ;
- d'autres formes des moyens de déplacement 110, 160 et 170 sont possibles et peuvent par exemple comprendre des actionneurs électriques, tels qu'un vérin électrique ;
- en variante non représentée au joint plat 84 et au joint à lèvre 284, chaque tête de tirage au vide peut comporter un joint constitué d'un boudin gonflable qui, à l'état dégonflé, est facilement introduit à l'intérieur du col d'une bouteille lors de la descente de la tête, tandis que, après gonflage, il épouse de manière étanche la périphérie intérieure du col de bouteille ; le gonflage du boudin est obtenu en reliant fluidiquement le boudin à une chambre de cylindre dont le volume est comprimé par un piston, avantageusement entraîné par du vide provenant de la pompe 6 ;
- l'appareil peut par ailleurs être équipé d'un système de neutralisation de chacune de ses têtes 60 et 62, afin de pouvoir y stocker, notamment à une température refroidie, une ou des bouteilles sans les tirer au vide, notamment des bouteilles non encore débouchées, étant remarqué que le stockage de telles bouteilles est permis dans l'appareil 201 sans aménagement complémentaire de ce dernier puisque c'est l'utilisateur qui commande directement la descente des têtes 260 et 262 ;
- l'actionnement de la pompe à vide 6 et/ou d'une motorisation d'entraînement des portes 50 et 52 ou 250 et 252 peut être commandé, en partie ou exclusivement, par des détecteurs de présence des bouteilles 2 et 3 dans les

compartiments correspondants 20 et 22 et/ou par des détecteurs de l'écartement et de l'approche de la main de l'utilisateur ;
- d'autres formes d'éléments de positionnement que la fourche 140 peuvent être envisagées, telles qu'une empreinte délimitée dans la paroi de plancher 18 ou 218, comme les calottes 218A et 218B, un V de centrage, etc. ;
- l'élément Pelletier 34 peut être remplacé par d'autres moyens de réfrigération, tels qu'un système à compresseur, un système à circulation d'eau froide, un système de réfrigération atmosphérique, etc. ; en outre, la valeur de la température de l'air froid obtenu par ces divers moyens de réfrigération peut être soit prédéterminée, en particulier selon que la bouteille de vin à refroidir contient du vin blanc ou du vin rouge, soit fixée par l'utilisateur en réglant une molette de consigne ou analogue ;
- la pompe à vide 6 peut être remplacée, de manière générale, par toute source de vide, telle qu'un réseau de vide ;
- le bâti 10 ou 210 peut ne délimiter qu'un seul compartiment de stockage, tout comme il peut en délimiter trois, voire davantage ; et/ou
- l'appareil peut intégrer des cellules photoélectriques permettant de reconnaître automatiquement par écart de transparence un vin blan ou un vin rouge, c'est-à-dire non seulement de détecter la présence d'une bouteille mais également d'ajuster la consigne de température de réfrigération en fonction du vin.

## Revendications

1. Appareil ménager (1 ; 201) de conservation d'au moins une bouteille (2, 3) contenant un liquide alimentaire et dont le col (4, 5) est ouvert, telle qu'une bouteille de vin débouchée et/ou partiellement consommée, lequel appareil comporte :
- une source de vide (6),
- au moins une tête (60, 62 ; 260, 262) de tirage au vide de la bouteille (2, 3), laquelle tête délimite un passage d'aspiration (100 ; 300) connecté à la source de vide (6) et est pourvue d'un joint d'étanchéité (84 ; 284),
- un bâti (10 ; 210), qui supporte la ou les têtes (60, 62 ; 260, 262) de manière mobile, et
- des moyens (110 ; 160 ; 170 ; 310) de déplacement de la ou chaque tête, adaptés pour guider mécaniquement la tête par rapport au bâti et pour plaquer le joint d'étanchéité (84 ; 284) de cette tête en appui étanche contre le col ouvert (4, 5) de la bouteille (2, 3) de sorte que le passage d'aspiration (100 ; 300) de cette tête débouche dans ce col lorsque la bouteille occupe une position prédéterminée fixe par rapport au bâti.

2. Appareil selon la revendication 1, **caractérisé en ce que** la ou chaque tête (60, 62 ; 260, 262) est munie, sur son côté tourné vers la bouteille (2, 3) dans sa position prédéterminée, d'une surface tronconique (80 ; 280) adaptée pour centrer la tête et la bouteille l'une sur l'autre lorsque la tête est plaquée contre le col (4, 5) de la bouteille par les moyens de déplacement (110 ; 160 ; 170 ; 310).

3. Appareil selon l'une des revendications 1 ou 2, **caractérisé en ce que** les moyens (110 ; 160 ; 170 ; 310) de déplacement de la ou chaque tête (60, 62 ; 260, 262) comprennent au moins une glissière (114, 116) ou un fourreau (314) de guidage de la tête, solidarisée fixement au bâti (10 ; 210).

4. Appareil selon l'une quelconque des revendications précédentes, **caractérisé en ce que** le bâti (10) délimite, pour la ou chaque bouteille (2, 3) à conserver, un compartiment (20, 22) de stockage de la bouteille dans sa position prédéterminée et est équipé d'une porte mobile (50, 52) d'accès à ce compartiment, dont les mouvements de fermeture et d'ouverture commandent les mouvements ou verrouillent/déverrouillent la position d'une partie mobile (112, 130 ; 166 ; 312) des moyens de déplacement (110 ; 160 ; 310).

5. Appareil selon la revendication 4, **caractérisé en ce qu'**il comporte un élément Pelletier (34) dont le corps principal (36) est muni, sur son côté froid (38), de deux blocs de ventilateur (44, 46) respectivement associés à deux compartiments (20, 22) délimités par le bâti (10) et thermiquement isolés l'un de l'autre.

6. Appareil selon la revendication 4, **caractérisé en ce qu'**il comporte un double élément Pelletier (234) dont les deux corps principaux (236, 237) sont, sur leur côté froid respectif (238, 239), respectivement munis de blocs de ventilateur (244, 246), qui sont respectivement associés à deux compartiments (220 ; 222) délimités par le bâti (210) et séparés l'un de l'autre par une cloison thermoconductrice (224).

7. Appareil selon l'une quelconque des revendications 4 à 6, **caractérisé en ce que** les moyens (110) de déplacement de la ou chaque tête (60, 62) comprennent des moyens mécaniques (118) de transmission de mouvement entre la porte correspondante (50, 52) et la tête, adaptés pour, d'une part, entraîner la tête jusqu'à la plaquer contre le col (4, 5) de la bouteille dans sa position prédéterminée lorsque la porte est déplacée pour fermer l'accès au compartiment correspondant (20, 22), et, d'autre part entraîner la tête en sens opposé lorsque la porte est déplacée pour ouvrir cet accès.

8. Appareil selon l'une quelconque des revendications 1 à 6, **caractérisé en ce que** les moyens (160) de déplacement de la ou chaque tête (60, 62) comportent, d'une part, une partie fixe (164), solidarisée au bâti (10) et raccordée à la source de vide (6), et, d'autre part, une partie mobile (166) d'entraînement de la tête, montée de manière déplaçable dans la partie fixe et actionnée par le vide fourni par la source de vide.

9. Appareil selon l'une quelconque des revendications 1 à 3, **caractérisé en ce que** les moyens (170) de déplacement de la ou chaque tête (60, 62) comporte un moyen élastique (172) interposé, directement ou indirectement, entre le bâti (10) et la tête, ce moyen élastique étant adapté pour être comprimé lorsque la bouteille (2, 3) est déplacée par rapport au bâti jusqu'à sa position prédéterminée, de sorte que ce moyen élastique applique un effort de compression élastique sur la tête pour l'entraîner et la plaquer contre le col (4, 5) de la bouteille lorsque cette dernière occupe sa position prédéterminée.

10. Appareil selon l'une quelconque des revendications précédentes, **caractérisé en ce que** les moyens (310) de déplacement de la ou chaque tête (260, 262) comportent un boîtier (312) de logement de la tête, apte à être entraîné manuellement par rapport au bâti (210) pour déplacer la tête jusqu'à la plaquer contre le col (4, 5) de la bouteille (2, 3) dans sa position prédéterminée.

11. Appareil selon la revendication 10, **caractérisé en ce que** les moyens (310) de déplacement de la ou chaque tête (260, 262) comportent en outre un moyen élastique (328) interposé, directement ou indirectement, entre le bâti (210) et le boîtier (312) de manière à être bandé lorsque le boîtier est entraîné pour déplacer la tête jusqu'à la plaquer contre le col (4, 5) de la bouteille (2, 3).

12. Appareil selon la revendication 10 ou 11, **caractérisé en ce que** les moyens (310) de déplacement de la ou chaque tête (260, 262) comportent en outre un moyen (330) de verrouillage du boîtier (312) dans une position dans laquelle la tête est plaquée contre le col de la bouteille (2, 3).

13. Appareil selon l'une quelconque des revendications précédentes, **caractérisé en ce que** le bâti (210) délimite, pour chaque tête (260, 262), une calotte concave (218A, 218B) sur laquelle la bouteille correspondante (2, 3) repose dans sa position prédéterminée, ladite calotte présentant un axe de révolution sensiblement confondu avec la direction (Z-Z) de guidage de la tête par rapport au bâti et un centre de courbure (C_{A}, C_{B}) situé dans la région de déplacement de la tête.

14. Appareil selon l'une quelconque des revendications précédentes, **caractérisé en ce que** les moyens (110 ; 160 ; 310) de déplacement de la ou chaque tête (60, 62 ; 260, 262) incluent un ressort de surcourse (136 ; 336) adapté pour accommoder une surcourse d'une partie mobile (112, 130, 132 ; 166 ; 312) de ces moyens par rapport à la tête lorsque cette dernière est plaquée contre le col (4, 5) de la bouteille (2, 3).

15. Appareil selon l'une quelconque des revendications précédentes, **caractérisé en ce que** la ou chaque tête (60, 62 ; 260 ; 262) comporte un corps principal (64 ; 264), lié en mouvement à une partie mobile (112, 130, 132 ; 312) des moyens de déplacement (110; 160 ; 170; 310), et une base (78; 278) d'appui sur le col (4, 5) de la bouteille (2, 3), assemblée au corps principal de manière mobile suivant la direction (Z-Z) de guidage de la tête par rapport au bâti (10 ; 210), et **en ce que** le passage d'aspiration (100 ; 300) comporte deux orifices traversants (96, 98 ; 296, 298) qui sont respectivement délimités par le corps principal (64 ; 264) et la base d'appui (78 ; 278) et qui sont en communication fluidique avec interposition d'une valve (76 ; 276) adaptée, à la fois, pour ouvrir le passage d'aspiration lorsque le corps principal et la base d'appui sont appuyés de manière étanche l'un contre l'autre et pour fermer ce passage d'aspiration lorsque le corps principal et la base d'appui sont écartés l'un de l'autre de manière non étanche.

## Claims

1. A household appliance (1; 201) for storing at least one bottle (2, 3) containing a beverage and having a neck (4, 5) that is open, such as a bottle of wine that has been uncorked and/or consumed in part;
the appliance including:
- a vacuum source (6)
- at least one suction head (60, 62; 260, 262) for evacuating the bottle (2, 3), said head defining a suction passage (100; 300) suitable for being connected to the vacuum source (6) and being provided with a sealing gasket (84 ; 284);
- a case (10; 210) supporting the head(s) (60, 62; 260, 262) in movable manner ; and
- means (110; 160; 170; 310) for moving the or each head, these means being adapted to guide the head mechanically relative to the case and to press the sealing gasket (84 ; 284) of this head to bear in leaktight manner against the open neck (4, 5) of the bottle (2, 3) so that its suction passage (100; 300) opens out into the neck when the bottle occupies a predetermined stationary position relative to the case.

2. An appliance according to claim 1, **characterized in that** the or each head (60, 62; 260, 262) is provided at its end facing towards the bottle (2, 3) in its predetermined position, with a frustoconical surface (80; 280) adapted to center the head and the bottle relative to each other when the head is pressed against the neck (4, 5) of the bottle by the means (110; 160, 170, 310) for moving the or each head.

3. An appliance according to claim 1 or claim 2, **characterized in that** the means (110; 160; 170; 310) for moving the or each head (60, 62; 260, 262) comprise at least one slideway (114, 116) or a sheath (314) for guiding the head, and permanently secured to the case (10; 210).

4. An appliance according to any preceding claim, **characterized in that**, for the or each bottle (2, 3) that is to be conserved, the case (10) defines a compartment (20, 22) for storing the bottle in its predetermined position and is fitted with a moving door (50, 52) giving access to said compartment, opening and closing movements of the door controlling movements or locking/unlocking of the position of a movable portion (112, 130; 166; 312) of the means (110; 160; 310) for moving the or each head.

5. An appliance according to claim 4, **characterized in that** it includes a Peltier element (34) having its main body (36) provided, on its cold side (38), with two fan units (44, 46) associated respectively with two compartments (20, 22) defined by the case (10) and thermally isolated from each other.

6. An appliance according to claim 4, **characterized in that** it includes a double Peltier element (234) having two main bodies (236, 237) that are provided on their respective cold sides (238, 239) with respective fan units (244, 246) that are associated respectively with two compartments (220; 222) defined by the case (210) and separated from each other by a thermally conductive partition (224).

7. An appliance according to any one of claims 4 to 6, **characterized in that** the means (110) for moving the or each head (60, 62) comprise mechanical means (118) for transmitting movement between the corresponding door (50, 52) and the head, and adapted firstly to drive the head so as to be pressed against the neck (4, 5) of the bottle in its predetermined position when the door is moved to close access to the corresponding compartment (20, 22),
and secondly to drive the head in the opposite direction when the door is moved to open said access.

8. An appliance according to any one of claims 1 to 6, **characterized in that** the means (160) for moving the or each head (60, 62) comprise firstly a stationary portion (164) secured to the case (10) and connected to the vacuum source (6), and secondly a movable portion (166) for driving the head, being mounted movably in the stationary portion and actuated by the vacuum delivered by the vacuum source.

9. An appliance according to any one of claims 1 to 3, **characterized in that** the means (170) for moving the or each head (60, 62) include resilient means (172) interposed directly or indirectly between the case (10) and the head, said resilient means being adapted to be compressed when the bottle (2, 3) is moved relative to the case into its predetermined position, so that the resilient means apply a resilient compression force on the head so as to drive it and press it against the neck (4, 5) of the bottle when said bottle occupies its predetermined position.

10. An appliance according to any preceding claim, **characterized in that** the means (310) for moving the or each head (260, 262) comprise a housing (312) for housing the head and suitable for being moved manually relative to the case (210) so as to move the head until it is pressed against the neck (4, 5) of the bottle (2, 3) in its predetermined position.

11. An appliance according to claim 10, **characterized in that** the means (310) for moving the or each head (260, 262) further comprise resilient means (328) interposed directly or indirectly between the case (210) and the housing (312) so as to be tensioned when the housing is driven to move the head so as to be pressed against the neck (4, 5) of the bottle (2, 3).

12. An appliance according to claim 10 or claim 11, **characterized in that** the means (310) for moving the or each head (260, 262) further comprise means (330) for locking the housing (312) in a position in which the head is pressed against the neck of the bottle (2, 3).

13. An appliance according to any preceding claim, **characterized in that**, for each head (260, 262), the case (210) defines a concave depression (218A, 218B) on which the corresponding bottle (2, 3) stands in its predetermined position, said depression presenting an axis of revolution that substantially coincides with the direction (Z-Z) in which the head is guided relative to the case, and presents a center of curvature (C_{A}, C_{B}) situated in the region in which the head moves.

14. An appliance according to any preceding claim, **characterized in that** the means (110; 160; 310) for moving the or each head (60, 62; 260, 262) include an over-stroke spring (136; 336) adapted to accommodate the over-stroke of a movable portion (112, 130, 132; 166; 312) of said means relative to the head when the head is pressed against the neck (4, 5) of the bottle (2, 3).

15. An appliance according to any preceding claim, **characterized in that** the or each head (60, 62; 260; 262) includes a main body (64; 264) constrained to move with a movable portion (112, 130, 132; 312) of the means (110; 160; 170; 310) for moving the or each head, and a base (78; 278) for bearing against the neck (4, 5) of the bottle (2, 3), the base being assembled to the main body so as to be movable in the direction (Z-Z) in which the head is guided relative to the case (10; 210), and **in that** the suction passage (100; 300) includes two through orifices (96, 98; 296, 298) that are defined respectively by the main body (64; 264) and the bearing base (78; 278) and that are in fluid flow communication with a valve (76; 276) interposed therebetween, the valve being adapted both to open the suction passage when the main body and the bearing base are pressed in leaktight manner against each other, and to close said suction passage when the main body and the bearing base are spaced apart from each other in non-leaktight manner.

## Patentansprüche

1. Haushaltsvorrichtung (1; 201) zur Lagerung mindestens einer Flasche (2, 3), die eine trinkbare Flüssigkeit enthält und deren Hals (4, 5) offen ist, wie beispielsweise einer geöffneten und/oder teilweise aufgebrauchten Weinflasche, wobei die Vorrichtung umfasst:
- eine Vakuumquelle (6),
- mindestens einen Kopf (60, 62; 260, 262) zum Vakuumieren der Flasche (2, 3), wobei der Kopf einen Ansaugdurchgang (100; 300) begrenzt, der an die Vakuumquelle (6) angeschlossen und mit einer Dichtung (84; 284) versehen ist,
- ein Gehäuse (10; 210), das den oder die Köpfe (60, 62; 260, 262) auf bewegliche Weise trägt, und
- Mittel (110; 160; 170; 310) zum Verschieben des oder der Köpfe, die dazu vorgesehen sind, den Kopf mechanisch in Bezug zum Gehäuse zu führen und die Dichtung (84; 284) dieses Kopfes dicht an den offenen Hals (4, 5) der Flasche (2, 3) anzulegen, so dass der Ansaugdurchgang (100; 300) dieses Kopfes in dem Hals mündet, wenn die Flasche eine feste vorbestimmte Position in Bezug zum Gehäuse einnimmt.

2. Vorrichtung nach Anspruch 1, **dadurch gekennzeichnet, dass** der oder jeder Kopf (60, 62; 260, 262) auf seiner zur Flasche (2, 3) in ihrer vorbestimmten Position gewandten Seite mit einer kegelstumpfartigen Fläche (80; 280) versehen ist, die dazu vorgesehen ist, den Kopf und die Flasche aufeinander zu zentrieren, wenn der Kopf gegen den Hals (4, 5) der Flasche durch die Verschiebemittel (110; 160; 170; 310) angelegt wird.

3. Vorrichtung nach einem der Ansprüche 1 oder 2, **dadurch gekennzeichnet, dass** die Mittel (110; 160; 170; 310) zum Verschieben des oder jedes Kopfes (60, 62; 260, 262) mindestens eine Gleitschiene (114, 116) oder eine Hülse (314) zur Führung des Kopfes umfassen, die fest mit dem Gehäuse (10; 210) verbunden ist.

4. Vorrichtung nach einem der vorhergehenden Ansprüche, **dadurch gekennzeichnet, dass** das Gehäuse (10) für die oder jede zu lagernde Flasche (2, 3) ein Abteil (20, 22) zur Lagerung der Flasche in ihrer vorbestimmten Position begrenzt und mit einer beweglichen Tür (50, 52) für den Zugriff auf dieses Abteil versehen ist, deren Schließen und Öffnen die Bewegungen steuern oder die Position eines beweglichen Teils (112, 130; 166; 312) der Verschiebemittel (110; 160; 310) verriegeln/entriegeln.

5. Vorrichtung nach Anspruch 4, **dadurch gekennzeichnet, dass** sie ein Pelletier-Element (34) umfasst, dessen Hauptkörper (36) auf seiner kühlen Seite (38) mit zwei Belüftungsblöcken (44, 46) versehen ist, die jeweils mit zwei Abteilen (20, 22) verbunden sind, die durch das Gehäuse (10) begrenzt und thermisch voneinander isoliert sind.

6. Vorrichtung nach Anspruch 4, **dadurch gekennzeichnet, dass** sie ein doppeltes Pelletier-Element (234) umfasst, deren beiden Hauptkörper (236, 237) auf ihrer jeweiligen kühlen Seite (238, 239) jeweils mit Belüftungsblöcken (244, 246) versehen sind, die jeweils mit zwei Abteilen (220; 222) verbunden sind, die vom Gehäuse (210) begrenzt und voneinander durch eine Wärme leitende Trennwand (224) getrennt sind.

7. Vorrichtung nach einem der Ansprüche 4 bis 6, **dadurch gekennzeichnet, dass** die Mittel (110) zum Verschieben des oder jedes Kopfes (60, 62) mechanische Mittel (118) zur Bewegungsübertragung zwischen der entsprechenden Tür (50, 52) und dem Kopf umfassen, die dazu vorgesehen sind, einerseits den Kopf anzutreiben, bis er am Hals (4, 5) der Flasche in ihrer vorbestimmten Position anliegt, wenn die Tür verschoben wird, um den Zugang zum entsprechenden Abteil (20, 22) zu verschließen, und andererseits den Kopf in die entgegen gesetzte Richtung anzutreiben, wenn die Tür verschoben wird, um diesen Zugang zu öffnen.

8. Vorrichtung nach einem der Ansprüche 1 bis 6, **dadurch gekennzeichnet, dass** die Mittel (160) zum Verschieben des oder jedes Kopfes (60, 62) einerseits einen festen Teil (164) umfassen, der mit dem Gehäuse (10) verbunden und an die Vakuumquelle (6) angeschlossen ist, und andererseits einen beweglichen Teil (166) für den Antrieb des Kopfes, der verschiebbar in dem festen Teil montiert ist und durch das von der Vakuumquelle gelieferte Vakuum betätigt wird.

9. Vorrichtung nach einem der Ansprüche 1 bis 3, **dadurch gekennzeichnet, dass** die Mittel (170) zum Verschieben des oder jedes Kopfes (60, 62) ein elastisches Mittel (172) umfassen, das direkt oder indirekt zwischen dem Gehäuse (10) und dem Kopf angeordnet ist, wobei dieses elastische Mittel derart ausgeführt ist, dass es zusammengedrückt wird, wenn die Flasche (2, 3) in Bezug zum Gehäuse bis in seine vorbestimmte Position verschoben wird, so dass dieses elastische Mittel eine elastische Kompressionskraft auf den Kopf ausübt, um ihn anzutreiben und gegen den Hals (4, 5) der Flasche zu drücken, wenn diese letztgenannte ihre vorbestimmte Position einnimmt.

10. Vorrichtung nach einem der vorhergehenden Ansprüche, **dadurch gekennzeichnet, dass** die Mittel (310) zum Verschieben des oder jedes Kopfes (260, 262) eine Gehäuseeinheit (312) zur Lagerung des Kopfes umfassen, die manuell in Bezug zum Gehäuse (210) angetrieben werden kann, um den Kopf zu verschieben, bis er am Hals (4, 5) der Flasche (2, 3) in ihrer vorbestimmten Position anliegt.

11. Vorrichtung nach Anspruch 10, **dadurch gekennzeichnet, dass** die Mittel (310) zum Verschieben des oder jedes Kopfes (260, 262) ferner ein elastisches Mittel (328) umfassen, das direkt oder indirekt zwischen dem Gehäuse (210) und der Gehäuseeinheit (312) angeordnet ist, um gespannt zu werden, wenn die Gehäuseeinheit angetrieben wird, um den Kopf zu verschieben, bis er am Hals (4, 5) der Flasche (2, 3) anliegt.

12. Vorrichtung nach Anspruch 10 oder 11, **dadurch gekennzeichnet, dass** die Mittel (310) zum Verschieben des oder jedes Kopfes (260, 262) ferner ein Mittel (330) zum Verriegelung der Gehäuseeinheit (312) in einer Position, in der der Kopf gegen den Hals der Flasche (2, 3) gedrückt ist, umfassen.

13. Vorrichtung nach einem der vorhergehenden Ansprüche, **dadurch gekennzeichnet, dass** das Gehäuse (210) für jeden Kopf (260, 262) eine konkave Kuppel (218A, 218B) begrenzt, auf der die entsprechende Flasche (2, 3) in ihrer vorbestimmten Position liegt, wobei die Kuppel eine Umdrehungsachse, die im Wesentlichen mit der Führungsrichtung (Z-Z) des Kopfes in Bezug zum Gehäuse zusammenfällt, und einen Krümmungsmittelpunkt (C_{A}, C_{B}) aufweist, der sich in dem Verschiebebereich des Kopfes befindet.

14. Vorrichtung nach einem der vorhergehenden Ansprüche, **dadurch gekennzeichnet, dass** die Mittel (110; 160; 310) zum Verschieben des oder jedes Kopfes (60, 62; 260, 262) eine Überlauffeder (136; 336) einschließen, die derart ausgeführt ist, dass sie einen Überlauf eines beweglichen Teils (112, 130, 132; 166; 312) dieser Mittel in Bezug zum Kopf ausgleichen, wenn dieser letztgenannte an den Hals (4, 5) der Flasche (2, 3) angelegt wird.

15. Vorrichtung nach einem der vorhergehenden Ansprüche, **dadurch gekennzeichnet, dass** der oder jeder Kopf (60, 62; 260, 262) einen Hauptkörper (64; 264), der in Bewegung mit einem beweglichen Teil (112, 130, 132; 312) der Verschiebemittel (110; 160; 170; 310) verbunden ist, und eine Basis (78; 278) zur Abstützung auf dem Hals (4, 5) der Flasche (2, 3) umfasst, die mit dem Hauptkörper in die Führungsrichtung (Z-Z) des Kopfes in Bezug zum Körper (10; 210) beweglich verbunden ist, und dass der Ansaugdurchgang (100; 300) zwei durchgehende Öffnungen (96, 98; 296, 298) umfasst, die jeweils vom Hauptkörper (64; 264) und der Stützbasis (78; 278) begrenzt sind und in Fließverbindung stehen, wobei ein Ventil (76; 276) dazwischen angeordnet ist, das dazu vorgesehen ist, sowohl den Ansaugdurchgang zu öffnen, wenn der Hauptkörper und die Stützbasis dicht aneinander abgestützt sind, als auch diesen Ansaugdurchgang zu schließen, wenn der Hauptkörper und die Stützbasis voneinander auf nicht dichte Weise entfernt sind.
